# EUROPEAN PATENT APPLICATION

(11) **EP 2 299 759 A1**
(43) Date of publication of application: **23.03.2011**
(21) Application number: 09290717.9
(22) Date of filing: 17.09.2009
(51) Int. Cl.: H04W 52/02

(54) **A femtocell base station, and method of controlling a femtocell base station**

(71) Applicant: Alcatel Lucent, 75008 Paris (FR)
(72) Inventor: Claussen, Holger, Co. Kildare (IE); Ashraf, Imran, Swindon, SN5 5AA Wiltshire (GB); Shahid, Malek, Chippenham, SN14 0TJ, Wiltshire (GB)
(74) Representative: Sarup, David Alexander

(57) **Abstract**

A method is provided of controlling a femtocell base station. The method comprises switching the femtocell base station to a state of sending pilot signal transmissions dependent upon the femtocell base station detecting a level of a signal in an uplink frequency band from a user terminal to a macrocell base station that is above a given threshold so indicating the user terminal is in active mode and in the femtocell.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell.

Femtocell base stations are intended primarily for users belonging to a particular home or office. Femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications.

Femtocell base stations are sometimes referred to as femtos.

Femtocell base stations are user-deployed base stations with a typical coverage range of tens of metres. They have extensive autoconfiguration and self-optimisation capabilities so as to enable simple plug-and-play deployment, and are designed to automatically integrate themselves into an existing macrocellular network. In addition, femtos may include some functionality traditionally provided by a core network, namely a Serving GPRS Support Node (SGSN) and a Gateway GPRS Support Node (GGSN). One example of a femto is a UMTS Base Station Router (BSR), where UMTS denotes Universal Mobile Telecommunications System (UMTS), which integrates some functionality of a UMTS base station (NodeB), a Radio Network Controller (RNC), SGSN and GGSN.

### Summary

The reader is referred to the appended independent claims. Some preferred features are laid out in the dependent claims.

An example of the present invention is a method of controlling a femtocell base station. The method comprises switching the femtocell base station to a state of sending pilot signal transmissions dependent upon the femtocell base station detecting a level of a signal in an uplink frequency band from a user terminal to a macrocell base station that is above a given threshold so indicating the user terminal is in active mode and in the femtocell.

In preferred embodiments, when no user terminal is detected in the femtocell, pilot transmissions and most processing are disabled, only a simple detector remaining active that may trigger re-activation from this idle mode.

In some preferred embodiments, a power level detector in the femtocell base station detects an active call between a user terminal and a macrocell base station when the user terminal is in the vicinity of the femtocell base station, in other words in the femtocell. This allows the femto to not send pilot signal transmissions and not undertake most processing associated with radio reception when no user terminal is in an active call with the femtocell base station. Upon a user terminal being detected, the femtocell base station becomes active. The user terminal may report to the macrocell its measurement of the pilot signal from the femtocell base station and the call connection with the user terminal may be handed over from the macrocell base station to the femtocell base station in consequence, for example if it is authorised for the femtocell base station. When all active calls have been served, the femtocell may again disable pilot transmission and processing for most radio reception whilst continuing to detect for a further active call connection between the user terminal and macrocell base station.

In some embodiments, pilot signals from the femtocell base station and the associated processing are disabled for most of the time.

Some preferred embodiments provide significant advantages over known approaches. For example, known approaches involve frequent periodic pilot transmissions when there is no active call connection involving the femtocell base station. This involves a basically continuous electromagnetic radiation exposure in the home. Although, the inventors know of no proof of any health risks, it is widely believed that minimising this exposure is desirable. The present invention in its preferred embodiments addressing this perceived problem by usually disabling pilot transmissions when the femtocell base station is not in active use, so significantly reducing user concerns and thereby improving users' acceptance of deploying base stations in their homes.

Furthermore, controlling energy consumption of femtocell base stations, in particular so as to help the environment, is increasingly becoming an issue. This is particularly as the numbers of femtocells in use increases. The present invention in its preferred embodiments reduces the energy used, by disabling pilot transmissions and most processing for significant periods.

In femtocell deployments, it is possible that a pilot signal radiates strongly out of a home or office in a busy area where user terminals not registered with that femtocell base station are passing by. In consequence, those passing user terminals make handover attempts or idle mode camping attempts to the femtocell base station causing signalling to and from the core network. Some preferred embodiments of the present invention significantly reduce this signalling, because pilot signals are not sent if a user terminal passes by in idle mode and therefore does not trigger any camping attempts and associated signalling.

Furthermore, some preferred embodiments of the present invention reduce interference that pilot signal transmissions from a femtocell base station provides to its neighbouring femtocell base stations, as the pilot signal transmission is disabled most of the time.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell base station deployment within one macrocell shown in Figure 1,
Figure 3 is a diagram illustrating one of the femtocell base stations shown in Figure 2,
Figure 4 is a diagrammatic graph illustrating, in the network shown in Figures 1 and 2, power received from a user terminal as a function of distance from the user terminal and an associated user terminal detection threshold applied by the femtocell base station shown in Figure 3, and
Figure 5 is a flow chart illustrating operation of the base station shown in Figure 3.

### Detailed Description

We now describe a network including femtocell base stations then look in greater detail at a femtocell base station and its operation in detecting whether a user terminal becomes present in the femtocell coverage area and so the femtocell should resume sending pilot signals; the transmission of pilot signals being suspended whilst no user terminal was detected as being in the femtocell coverage area.

### Network

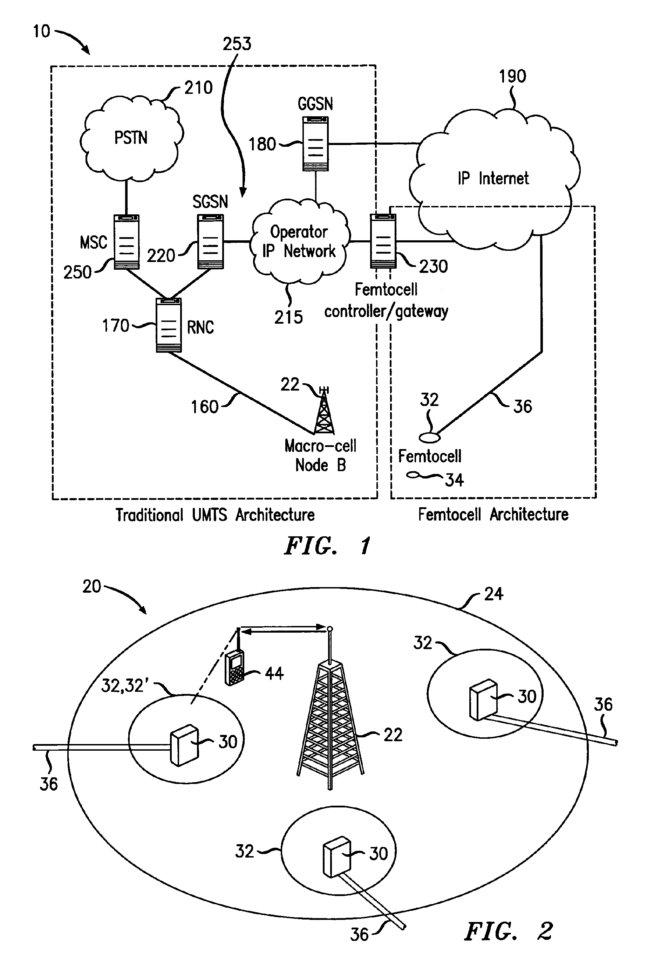

As shown in Figures 1 and 2, a network 10 for wireless communications, through which a user terminal 34 may roam, includes two types of base stations, namely macrocell base stations and femtocell base stations (the latter being sometimes called "femtos"). One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with service general packet radio service support nodes (SGSNs) 220 and a gateway general packet radio support node (GGSN) 180. The GGSN then communicates with a packet-switch core 190 such as, for example, the Internet.

The MSC 250 , SGSN 220, GGSN 180 and operator IP network constitute a so-called core network 253. The SGSN 220 and GGSN 180 are connected by an operator IP network 215 to a femtocell controller/gateway 230.

The femtocell controller/gateway 230 is connected via the Internet 190 to the femtocell base stations 32. These connections to the femtocell controller/gateway 230 are broadband Internet Protocol connections ("backhaul") connections.

In Figure 2, three femtocell base stations 30 and corresponding femtocells 32 are shown for simplicity.

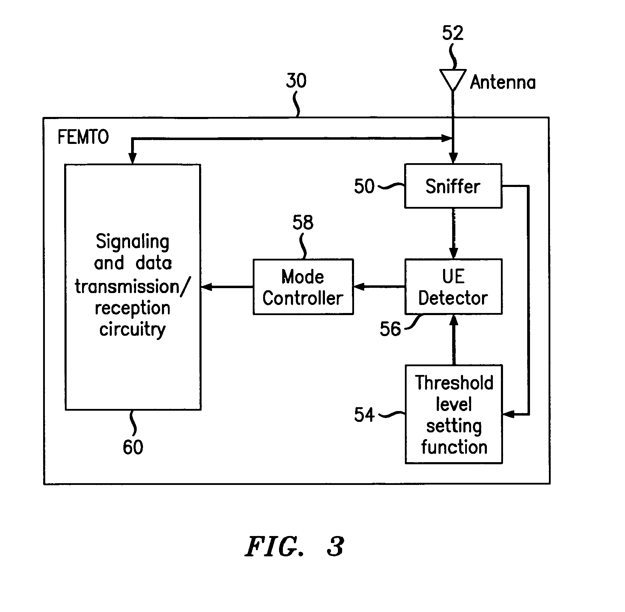

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 3, the user of mobile terminal 34 is a preferred user of the nearest 32' of the femtocells 32.

As shown in Figure 2, the femtocell base stations 30 are connected via the broadband Internet Protocol connections ("backhaul") 36 to the core network (not shown in Figure 3) and hence the rest of the telecommunications "world" (not shown in Figure 3). The "backhaul" connections 36 allow communications between the femtocell base stations 30 through the core network (not shown). The macrocell base station is also connected to the core network (not shown in Figure 3).

### Detection of a user terminal in the coverage area of the femto

As shown in Figure 3, each femto 30 includes a so-called sniffer 50 connected to an antenna 52, a threshold setting stage 54 and a user terminal detector 56. The user terminal detector 56 is connected to an operating-mode controller 58. The femto 30 also includes other transmission/reception circuitry 60 for control signalling and for data.

The sniffer 50 is a detector operative to measure power in the uplink frequency band of the macrocell. Usually this is at low level which from the perspective of the femto is considered merely background noise. When a user terminal in the vicinity of the femtocell makes a call to the macrocell, the sniffer 50 detects a rise in that "noise" power level due to power received from the user terminal in that band. If it is determined in the user terminal detector 56 that this higher "noise" level detected by a femto is above a predetermined threshold at which the user terminal is close enough to the femto to be likely covered by the femtocell, then the detector 56 informs the operating-mode controller 58 which brings the femto into a relatively more active state in which pilot transmissions are sent and processing of replies to pilot signalling is undertaken.

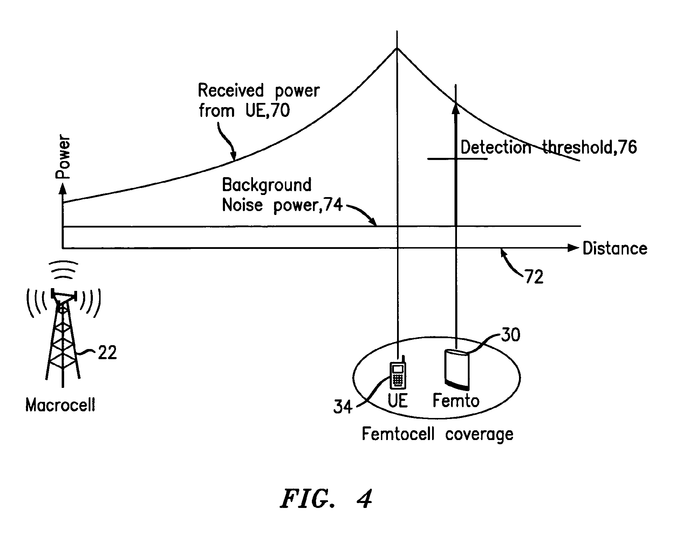

This is further illustrated in Figure 4, where power level 70 received from a user terminal as a function of distance 72 from the user terminal is shown graphically, as is the usual background noise level 74. The femto detects as noise a combined signal of the power received from the user terminal plus the background noise level.

A threshold is set for which if the received power exceeds that threshold then the user terminal is taken to be within the femtocell coverage area. This is the detection threshold 76 shown in Figure 4. This threshold is set automatically by the threshold setting stage 54 shown in Figure 3 such that a user terminal at the edge of the femtocell coverage area causes the combined signal received by the femto to just exceed the threshold, and so can be identified as within the femtocell coverage area.

This threshold 76 is set automatically based on an estimate of radio signal attenuation (also known as pathloss) that would be experienced by signals between a user terminal and femto. A first estimate of this is made by measuring attenuation experienced by signals from the macrocell base station 22 to the femto, and then assuming this attenuation would also be experienced by the user terminal within the femtocell, the femtocell being small in size compared to the macrocell. Specifically, attenuation of downlink pilot signals from the macrocell is measured at the femto 30 by the sniffer 50.

Subsequently, this attenuation estimate is improved during operation by performing measurements of attenuation from the macrocell base station to various user terminals. These are reported in measurement reports from user terminals to the femtocell base station.

The threshold 76 is set and subsequently adjusted based on these reported measurements by calculating, using the attenuation estimate, user terminal transmit power for communicating with the macrocell base station when the user terminal in active mode is located at the femtocell edge; and then calculating the level of this signal that would be received at the femtocell base station using an estimate of the signal attenuation between the user terminal and femto. Specifically, the estimate of signal attenuation between the femto and the user terminal is calculated as follows. Using the distance between the femtocell base station and the femtocell edge (which is where the user terminal is located) and the attenuation estimate, attenuation per unit distance is calculated. Using the attenuation per unit distance, and the distance between the femtocell base station and the user terminal at the femtocell edge, the attenuation between the femtocell base station and the user terminal is calculated. From the user terminal transmit power and this calculated attenuation from the femtocell base station to user terminal, the threshold level 76 is arrived at.

Upon an user terminal in active mode, in other words a call- or session-connected mode, entering the femtocell coverage area, the detector 56 identifies that the user terminal has entered the cell coverage area provided the power received exceeds the threshold (d) for more than a predefined time.

### Varying femto operation dependent upon whether a user terminal is detected

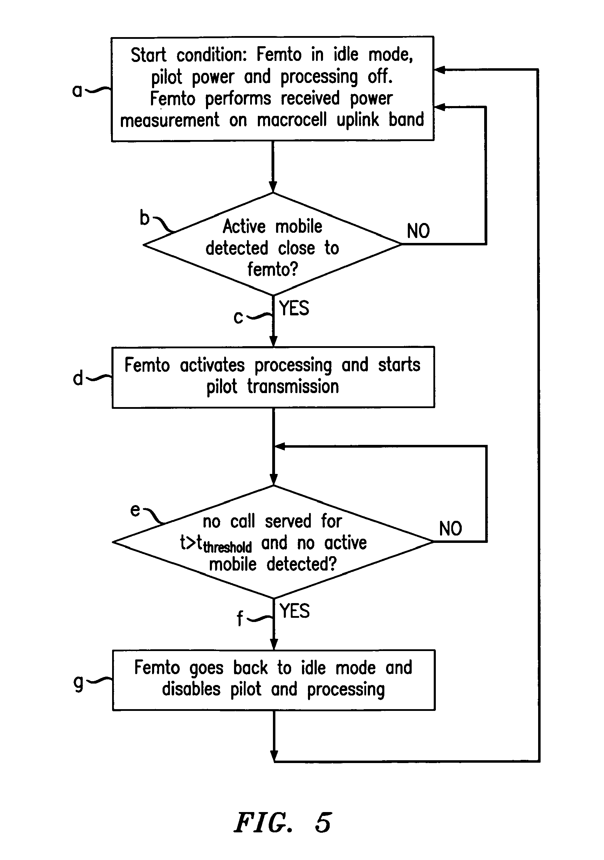

The ability described above to identify whether an active-mode user terminal is in the femto coverage area is used to enable the femto to not make pilot transmissions, and cease most of the processing that the femto would normally undertake whilst no user terminal in active-mode is in the femto coverage area. This is explained in more detail below with reference to Figure 5.

### Femto cell in idle mode "wakes up"

As shown in Figure 5, initially (step a) the femto 30 is in idle mode in which pilot signal transmission is switched off. Also, in this mode, processing is switched off, except for the sniffer 50 which actively performs measurement of power of signals received on the uplink frequency band of the macrocell. These measurements by the sniffer 50 enable the femto 30 to detect (step b) whether or not an active user terminal in the vicinity of the femto 30 as explained above. If yes (step c) an active user terminal is detected, then the femto "wakes up" from idle mode by (step d) activating other processing and starting pilot signal transmissions.

### Handover Initiation

Although not shown in Figure 5, the next steps are that the user terminal measures pilot signals from the femto and reports these to the macrocell, and as a result the RNC 170 of the macrocell initiates a handover of the call from being with the macrocell base station to being with the femto. Dependent upon whether or not the active user terminal is one allowed access to the femto, either the handover is completed and so the femto serves the user terminal, or the handover is rejected. If the handover is completed, the femto serves the user terminal until the call has terminated or the user terminal has moved out of the femto coverage area and so the call has been handed over to another base station.

### Femto goes "back to sleep"

As shown in Figure 5, the next step is to determine (step e) whether no call is being served by the femto for more than a predefined time, in other words there are no active user terminals in the femtocell for at least a timeout period. If yes (step f), then the femto reverts (step g) to the idle mode in which pilot signal transmissions are not sent and other processing is switched off except for the sniffer 50 which performs measurement of power of signals received on the uplink frequency band of the macrocell.

### Emergency calls

The above described feature, of allowing the femto to "go to sleep" if no user terminal is detected in the femtocell, is only activated when it is confirmed that there is sufficient macrocell coverage that there are transmissions between the user terminal and macrocell base station that the femto sniffer could detect so as then "wake up" the femto. This is done by measurements of pilot transmissions from the macrocell, performed by the femto or user terminals. Otherwise the femto stays awake in terms of its processing and pilot signal transmissions, so as to provide continuous coverage in case of emergency calls.

### Some Variants

Some variants to the above-described embodiment(s) are now described.

### Co-channel Operation

In the above described embodiment, the femto uses a different carrier frequency to the macrocell. However in an otherwise similar embodiment, the femto uses the same carrier frequency as the macrocell, sometimes known as co-channel operation. In this case, the femto gradually increases the power of femtocell pilot transmissions, for example over a few seconds, so that the macrocell base station has sufficient time to hand over the call connection with the user terminal to the femto. Otherwise the interference from the femtocell would become so strong before handover is completed that the call is dropped.

### Wake-up only if user terminal identified as registered

In another otherwise similar embodiment, the femto is notified by the core network whenever a user terminal with access rights to that femto is making a call via the macrocell base station in which the femotocell base station is located. This is used as an additional condition to wake up the femto. When a user terminal is detected by the femto sniffer in the femtocell, the femto is only "woken up" to start the further processing and pilot signal transmissions if the user terminal is identified as being one registered as having access rights to the femto. This additional requirement further reduces the amount of time for which the femto is active thereby reducing unnecessary signalling and interference.

### Other

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of controlling a femtocell base station, the method comprising switching the femtocell base station to a state of sending pilot signal transmissions dependent upon the femtocell base station detecting a level of a signal in an uplink frequency band from a user terminal to a macrocell base station that is above a given threshold so indicating the user terminal is in active mode and in the femtocell.

2. A method of controlling a femtocell base station according to claim 1, in which the method comprises switching the femtocell base station to a state of not sending pilot signal transmissions dependent upon the femtocell base station detecting a level of the signal in said uplink frequency band that is below a given threshold so indicating no user terminal in active mode is in the femtocell.

3. A method of controlling a femtocell base station according to claim 1 or claim 2, in which the user terminal detects the pilot transmissions and triggers handover of radio connection to the macrocell base station to radio connection to the femtocell base station.

4. A method of controlling a femtocell base station according to any preceding claim, in which the femtocell base station uses a same carrier frequency as the macrocell base station, so increases power of the pilot signal transmissions over a period sufficient to enable handover to the femtocell base station.

5. A method of controlling a femtocell base station according to claim 4, in which the period is sufficient to enable handover before the power of pilot signals from the femtocell, which the macrocell experiences as interference, becomes too large.

6. A method of controlling a femtocell base station according to any preceding claim, in which the switching of the femtocell base station to the state in which pilot signals are sent is dependent also upon a user terminal which is authorised to use the femtocell base station being call-connected to the macrocell base station in which the femtocell base station is located.

7. A method of controlling a femtocell base station according to any preceding claim, in which the switching of the femtocell base station to the state in which pilot signals are sent is dependent also upon the detected level of the signal being above the threshold for a predetermined time.

8. A method of controlling a femtocell base station according to any preceding claim, in which to enable coverage for emergency calls, the femtocell base station is kept in the state in which the pilot signals are sent unless the detected level of the signal is determined as being less than the threshold, the macrocell coverage is determined as sufficient to enable signals between the user terminal and macrocell base station, and the femtocell base station is not in a call.

9. A method of controlling a femtocell base station according to claim 8, in which the macrocell coverage is determined as sufficient provided measurements made of pilot signals from the macrocell so indicate.

10. A femtocell base station,
the femtocell base station comprising a detector configured to detecting a level of a signal in an uplink frequency band from a user terminal to a macrocell base station,
an identifier stage configured to determine whether the detected signal level is above a threshold indicating the user terminal is in active mode and in the femtocell, and
a controller operative to switch the femtocell base station between a state of sending pilot transmissions and a state of not sending pilot signal transmissions dependent upon said determination.

## Amended claims

### Amended claims in accordance with Rule 137(2) EPC.

**1.** A method of controlling a femtocell base station (30), the method comprising switching (Fig 5:step d) the femtocell base station to a state of sending pilot signal transmissions dependent upon the femtocell base station detecting (Fig 5:step b) a level of a signal in an uplink frequency band from a user terminal to a macrocell base station (22) that is above a given threshold (76) so indicating the user terminal is in active mode and in the femtocell,
**Characterised in that** the femtocell base station uses a same carrier frequency as the macrocell base station, so gradually increases power of the pilot signal transmissions over a period sufficient to enable handover of radio connection to the macrocell base station to radio connection to the femtocell base station,
in which the period is sufficient to enable handover before the power of pilot signals from the femtocell base station, which the macrocell base station experiences as interference, becomes too large.

**2.** A method of controlling a femtocell base station according to claim 1, in which the method comprises switching the femtocell base station to a state of not sending pilot signal transmissions dependent upon the femtocell base station detecting a level of the signal in said uplink frequency band that is below a given threshold so indicating no user terminal in active mode is in the femtocell.

**3.** A method of controlling a femtocell base station according to any preceding claim, in which the switching of the femtocell base station to the state in which pilot signals are sent is dependent also upon a user terminal which is authorised to use the femtocell base station being call-connected to the macrocell base station in which the femtocell base station is located.

**4.** A method of controlling a femtocell base station according to any preceding claim, in which the switching of the femtocell base station to the state in which pilot signals are sent is dependent also upon the detected level of the signal being above the threshold for a predetermined time.

**5.** A method of controlling a femtocell base station according to any preceding claim, in which to enable coverage for emergency calls, the femtocell base station is kept in the state in which the pilot signals are sent unless the detected level of the signal is determined as being less than the threshold, the macrocell coverage is determined as sufficient to enable signals between the user terminal and macrocell base station, and the femtocell base station is not in a call.

**6.** A method of controlling a femtocell base station according to claim 5, in which the macrocell coverage is determined as sufficient provided measurements made of pilot signals from the macrocell base station (22) so indicate.

**7.** A femtocell base station (30),
the femtocell base station comprising a detector (50) configured to detecting a level of a signal in an uplink frequency band from a user terminal to a macrocell base station,
an identifier stage (56) configured to determine whether the detected signal level is above a threshold indicating the user terminal is in active mode and in the femtocell; and
a controller (58) operative to switch the femtocell base station between a state of sending pilot transmissions and a state of not sending pilot signal transmissions dependent upon said determination;
**characterised in that** the femtocell base station uses a same carrier frequency as the macrocell base station, so in use gradually increases power of the pilot signal transmissions over a period of time sufficient to enable handover of radio connection to the macrocell base station to radio connection to the femtocell base station; and
in which the period is sufficient to enable handover before the power of pilot signals from the femtocell base station, which the macrocell base station experiences as interference, becomes too large.
